# EUROPEAN PATENT SPECIFICATION

(11) **EP 4 602 433 B1**
(45) Date of publication and mention of the grant of the patent: **15.07.2026**
(21) Application number: 23749075.0
(22) Date of filing: 31.07.2023
(51) Int. Cl.: G02F 1/1343, E06B 3/67, G02F 1/1334, G02F 1/133, E06B 9/24

(54) **SMART FILM FOR A DISPLAY**
INTELLIGENTE FOLIE FÜR EINE ANZEIGE
FILM INTELLIGENT POUR UN DISPOSITIF D'AFFICHAGE

(30) Priority: 14.10.2022 EP 22382979
(43) Date of publication of application: 20.08.2025
(73) Proprietor: Dream Glass S. L., 28860 Paracuellos De Jarama (ES)
(72) Inventor: MESHKAT MAMALEK, Mojtaba, 28860 Paracuellos De Jarama (ES); FEIXAS, Enric, 08912 Badalona (ES); VILLAR, José Manuel, 28860 Paracuellos De Jarama (ES)
(74) Representative: TRBL Intellectual Property
(86) International application number: PCT/EP2023/071169
(87) International publication number: WO 2024/078771

(56) References cited:
- CN-A- 107 045 220
- CN-U- 210 666 261
- US-A1- 2017 152 702
- US-A1- 2017 307 916
- US-A1- 2019 317 344
- US-A1- 2020 409 208
- US-A1- 2021 208 437

## Description

### TECHNICAL FIELD

This invention belongs to the field of smart film and smart glaze comprising an electrically modifiable element embedded between two conductive substrates.

### STATE OF THE ART

Smart film and glaze systems are usually employed in producing immediate privacy and or images of attractions applied in partitioning and windows of showrooms, exhibitions, hotels, automotive industries with further applications as the barrier of UV and IR rays to save energy and bring comfort to the applied spaces.

As a specific example of switchable smart film and glaze, the polymer-dispersed liquid crystals (PDLC) herewith studied. The device can convert transparent sections of substrate to opaque and vice-versa by controlling each section independently or converting the sections to semi-opaque depending on the states of the liquid crystals.

The present invention uses this technology, but provides an advantageous system which improves the use and final result of the device.

US 2019/317344 A1 discloses a PDLC film comprising a longitudinally etched conductive film and a transversally etched conductive film disposed substantially parallel to each other, and a PDLC located in between.

### DESCRIPTION OF THE INVENTION

The invention provides an alternative solution for PDLC screens by means of a device according to claim 1 and a method for manufacturing the same according to claim 10. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides inter alia an optical arrangement comprising a first transparent conductive electrode, a second transparent conductive electrode and an active optic material arranged between the first and the second transparent conductive electrodes in electric contact with the first and the second transparent conductive electrodes,
wherein the active optic material is configured to change at least one optical property when subject to an electrical voltage;
wherein the first transparent conductive electrode is divided into first sections, each first section being electrically isolated with respect to the rest of the first sections,
wherein the second transparent conductive electrode is divided into second sections, each second section being electrically isolated with respect to the rest of the second sections,
wherein the optical arrangement further comprises a control unit configured to provide an electric signal to each of the first sections and to each of the second sections, wherein the control unit is configured to provide at least a first scenario where all the second sections receive the same electric signal and at least two first sections receive different electric signals and a second scenario wherein all the first sections receive the same electric signal and at least two second sections receive different electric signals.

The active optical material is a material that is configured to change at least one optical property (e.g., transparency to a particular range of light wavelength) when a voltage is applied between two sides of the same. There are many different types of active optical materials.

Due to this structure, the same optical arrangement may work in two different scenarios. In the first scenario, all the second sections work as a single electrode, since all of them are being fed with the same electric signal. The first sections will be fed with different signals (it is not necessary that every first section has its own different signal, second sections may be grouped) and the relation between the signal of each particular first section and the common signal of the second sections will define the transparency level of each first section. The second scenario has the same principle but replacing the first sections by the second sections, and vice-versa.

Hence, the same optical system is configured to provide two completely different patterns depending on the selected scenario.

The control unit comprises a first element configured to receive a sinusoidal alternate current and transform it to a direct current signal and comprises a second element configured to transform the direct current signal to an alternate square wave, and comprises a third element configured to create phase-shifted signals from the square wave and to feed the first and second sections with the phase-shifted signals.

The control unit uses a common power supply to create a plurality of phase-shifted square waves. These square waves are easy to compare. Since the optical properties of the active optical element depend on the voltage between two sides, comparing two square waves is advantageous to define the operation of each portion of the optical arrangement.

In some particular embodiments, the active optical material has a thickness comprised between 5 and 100 micrometres.

A lower thickness would not be enough for the present application.

In some particular embodiments, the first transparent conductive electrode and/or the second transparent conductive electrode comprises Indium Tin Oxide, silver nanowires, carbon nanotubes, graphene, transparent conductive polymers or nanometals.

These examples correspond to materials which provide a good compromise between transparency and electric conductivity.

In some particular embodiments, the first transparent conductive electrode is deposited on a first transparent substrate and/or the second transparent conductive electrode is deposited on a second transparent substrate.

The present invention may be applied on many different types of substrates. In some particular embodiments, the first transparent substrate and/or the second transparent substrate comprises a glass. In different particular embodiments, the first transparent substrate and/or the second transparent substrate comprises a plastic film, such a film made of polyethylene terephthalate.

In some particular embodiments, first transparent substrate and/or the second transparent substrate comprises an IR coating.

This is advantageous to block IR radiation.

In some particular embodiments, the active optical material comprises a Polymer-Dispersed Liquid Crystal.

This material can work with a wide range of voltage values, and provide good properties of transparency and opacity.

In some particular embodiments, the active optical material comprises a black dichroic dye Polymer Dispersed Liquid Crystal.

This material further provides IR protection.

In a further inventive aspect, the invention provides a method for manufacturing an optical arrangement according to any of the preceding claims, comprising the steps of
providing a first transparent conductive electrode, a second transparent conductive electrode and an active optic material, wherein the active optic material is configured to change at least one optical property when subject to an electrical voltage and comprises a first face and a second face, the second face being opposite to the first face;
attach the first transparent conductive electrode to the first face of the optic material and attach the second transparent conductive electrode to the second face of the active optic material, thus achieving a readymade film;
etching the first transparent conductive electrode into first sections, each first section being electrically isolated with respect to the rest of the first sections, wherein the etching process is done by means of a picosecond ultraviolet laser device;
etching the second transparent conductive electrode into second sections, each second section being electrically isolated with respect to the rest of the second sections, wherein the etching process is done by means of a picosecond ultraviolet laser device;
connecting a control unit to the first and second transparent conductive electrodes, wherein the control unit is configured to provide at least a first scenario where all the second sections receive the same electric signal and at least two first sections receive different electric signals and a second scenario wherein all the first sections receive the same electric signal and at least two second sections receive different electric signals.

With this method, etching of the conductive electrodes is performed directly on the readymade film, not in the individual electrode portions. Further, with this method there is no need to create a precise adjustment of two electrodes together in the process of lamination of PDLC film, which is time consuming and producing some scraps. In this case, since the electrodes are already installed and hence automatically aligned, there is no need of this complex operation.

Another advantage is that there is no need to provide a clean-room environment, since the risk of contamination is removed.

Finally, the etching operation is cleaner, faster, eco-friendly (there is a lot of scrap saving, they do not need a clean room and much energy is saved in the process), and more economical in respect to etching each conductive layer separately.

In some particular embodiments, the method further comprises a step of rotating the readymade film between the step of etching the first transparent conductive electrode and the step of etching the second transparent conductive electrode.

With this step, the same picosecond ultraviolet laser device may be used for the operations on both sides, and the rotating mechanism may be calibrated so that the etching operation is performed accurately.

In some particular embodiments, the shape of at least one of the second sections is different from the shape of at least one of the first sections.

When each side has a different pattern, the same final product may be used to create different patterns.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a schematic view of a first embodiment of a film arrangement according to the invention.
Figure 2 shows a perspective view of such a film arrangement.
Figure 3 shows a different perspective view of such a film arrangement.
Figures 4 and 5 show different scenarios of operation of this film arrangement.

In these figures, the following reference numbers have been used:
- 1: First transparent electrode
- 2: Second transparent electrode
- 3: Active optic material
- 4: PET sheet
- 5: PET sheet
- 6: Control unit
- 11-19: First sections
- 21-23: Second sections

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

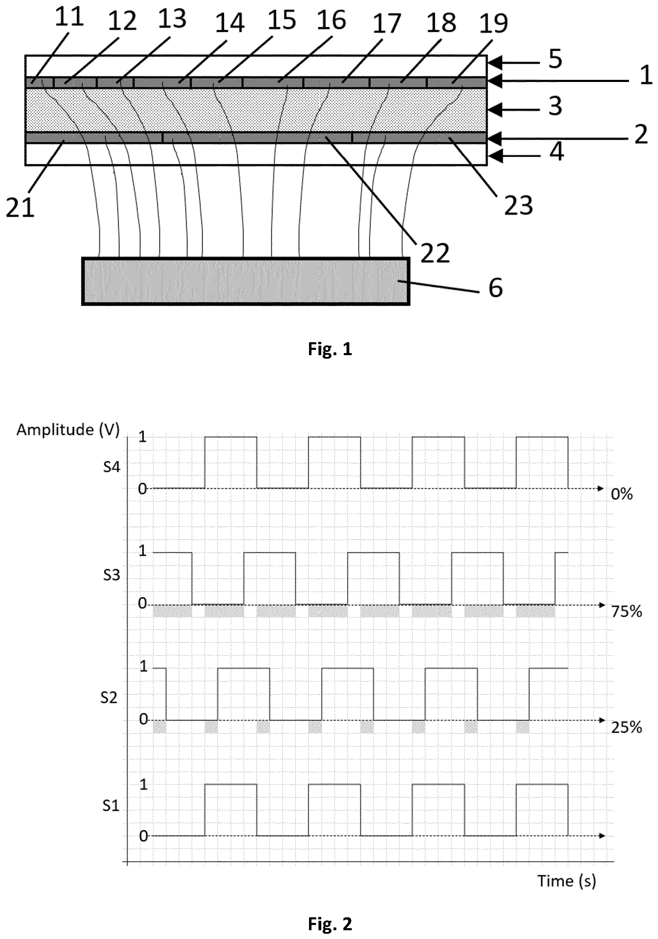

Figure 1 shows a schematic view of a first embodiment of a film arrangement according to the invention.

In this schematic view, the film arrangement comprises a first transparent electrode 1, a second transparent electrode 2 and an active optic material 3 arranged between the first 1 and the second 2 transparent electrodes. The active optic material 3 is in direct contact with the first 1 and the second 2 transparent electrodes.

The optical properties of this active optic material are defined by the voltage received by the same. When this received voltage overcomes a predefined threshold, the transparency of this material changes.

In some cases, the material is opaque when no voltage is applied and then changes from opaque to transparent when a voltage is applied between the two sides. In other cases, (called "reverse mode cases"), the material is transparent when no voltage is applied and then changes from transparent to opaque when a voltage is applied between the two sides.

In this particular embodiment, the active optic material 3 is a Polymer-Dispersed Liquid Crystal (PDLC), although in other embodiments also belonging to the invention, different materials may be used. Also, the transparent electrodes are Indium Tin Oxide (ITO), although in other cases, other types of transparent electrodes (such as silver nanowires, AgNW) may be used.

Each transparent electrode is deposited on a **PET** sheet 4, 5. Hence, the structure may be installed in a partition panel of an office, to cite some examples. In other embodiments, however, these electrodes may be installed in other substrates, such as glass panes, so that the structure may be installed in a house (either in a door or in a window).

In this figure, it is also seen how the first transparent electrode 1 is divided into first sections 11-19. Although nine first sections have been illustrated in this figure, this is just a generic example. These element sections are obtained by etching, which is usually done by laser cut. The final result is that each first section is electrically independent, although there may be additional connections between some of them, to create section groups.

In turn, the second transparent electrode 2 is also divided into second sections 21-23. These sections are obtained by etching, which is usually done by laser cut. The final result is that each second section is electrically independent, although there may be additional connections between some of them, to create section groups. Once again, although only three second sections are illustrated, any number of them may be performed in different embodiments.

Electric signal is provided to each section by a control unit 6, which receives a standard AC voltage, transforming it into a DC voltage and then to an alternative square-wave with or without phase-shift.

This figure is simple on purpose, for the sake of understanding the invention since, in a real product, as will be shown below, there may be dozens of different sections.

Figure 2 shows a first scenario according to the claimed invention and of use of this optic arrangement.

In this first scenario, all the second segments are fed by the same signal S1, so they work as a single electrode.

Different groups of first segments are fed by different phase-shifted signals. A first group of first segments is fed with a second signal S2, which is shifted 45° with respect to the first signal S1 feeding the second segments.

As a consequence, the corresponding sections are only activated during 25% the period of the wave (where the waves S1 and S2 provide different values, and therefore, there is a 25% transparency value in the corresponding section).

A second group of first segments is fed with a third signal S3, which is shifted 135° with respect to the first signal S1 feeding the second segments.

As a consequence, the corresponding sections are only activated during 75% of the period of the wave (where the waves S1 and S3 provide different values, and therefore, there is a 75% transparency value in the corresponding section).

Finally, a third group of first segments is fed with a third signal S4, which is shifted 0° with respect to the first signal S1 feeding the second segments.

As a consequence, the corresponding sections are never activated during the period of the wave (waves S1 and S4 never provide different values, and therefore, there is a 0-voltage value in the corresponding section).

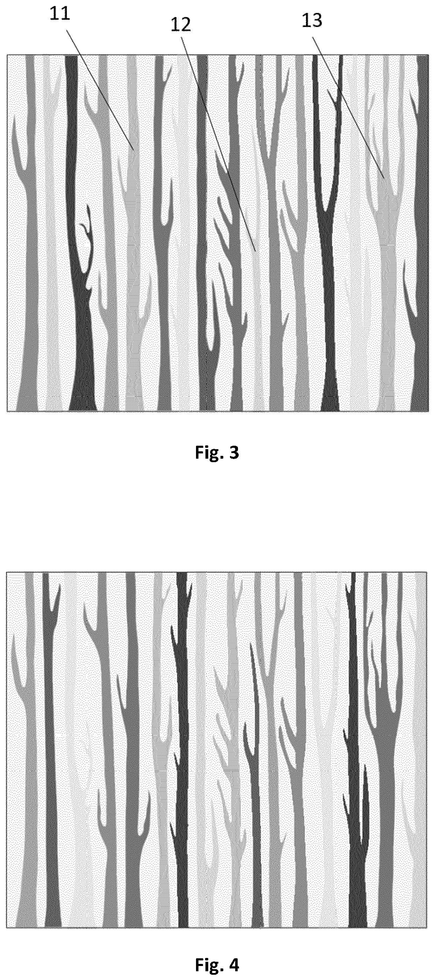

Figures 3 and 4 show an example of this operation by seeing different embodiments of this first scenario.

As may be seen in these figures, the first sections have been delimited as tree trunks silhouettes. In this figure, there are nine different groups, although in different examples, any number of groups is possible.

In this first scenario, all the segments of the second transparent electrode are provided with the same electric signal, so they work as a single electrode. Hence, the pattern that will be seen will be defined by the different signals which are provided to each of the first sections.

Some trees would be fed by signal S2, some of them by signal S3 and some of them by signal S4, according to the previous figure. More signals would be available for the rest of trees, but these three signals are enough to illustrate the invention.

Hence, each tree would have a different transparency level (tree fed with S2 would have a 25% transparency, tree fed with S3 would have a 75% transparency and tree fed with S4 would be opaque).

Figure 4 shows the same embodiment but changing the signals provided to each group (for example, those trees which received signal S2 in figure 2 are now receiving S3, and so on).

Hence, by a dynamic control, a patterned change of the transparency (shades) of each group of trees may be gradually produced in thousands of different combinations. By playing with these differences, different levels may be achieved by moving the backward trees to the front and the front to the back and vice-versa, thus creating a dynamic art scenery. This effect could be continued or stopped at users' will through an App installed on a mobile phone or a tablet of the user.

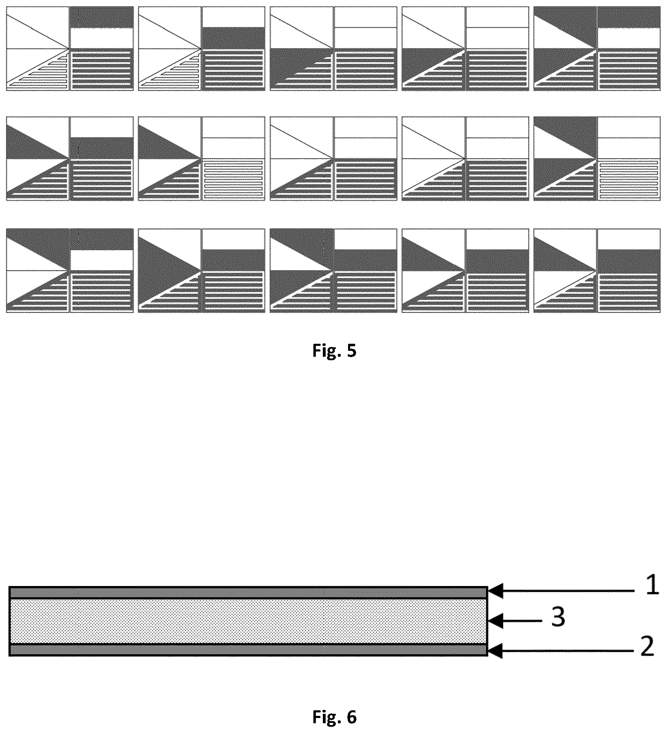

Figure 5 shows the same optic arrangement, but in a second scenario. Here, all the first sections are fed with the same common electric signal, and the second sections are fed with different signals. Now, the pattern is defined by the second sections, which are completely different from the first sections. In this figure, it can be seen the many different effects that can be achieved with this arrangement.

The outstanding advantage of this arrangement is that, since the two conductive elements are transparent, these different effects are seen in the same glass from each of the two sides: the same glass seen from the same side may offer a circles-pattern or a trees-pattern. Needless to say, these two patterns may be as complex as needed by the designs, the example shown in these figures is intentionally simple, for the sake of clarity and an easy understanding of the invention.

Figure 6 shows some steps of a method according to the invention, which is suitable for manufacturing a product as described in the previous figures.

In this figure, a first transparent conductive electrode 1, a second transparent conductive electrode 2 and a PDLC film 3 are provided. The PDLC film 3 is configured to change at least one optical property when subject to an electrical voltage and comprises a first face and a second face, the second face being opposite to the first face.

The first transparent conductive electrode 1 is attached to the first face of the PDLC film 3 and the second transparent conductive electrode 2 is attached to the second face of the active optic material 3, thus achieving a readymade film.

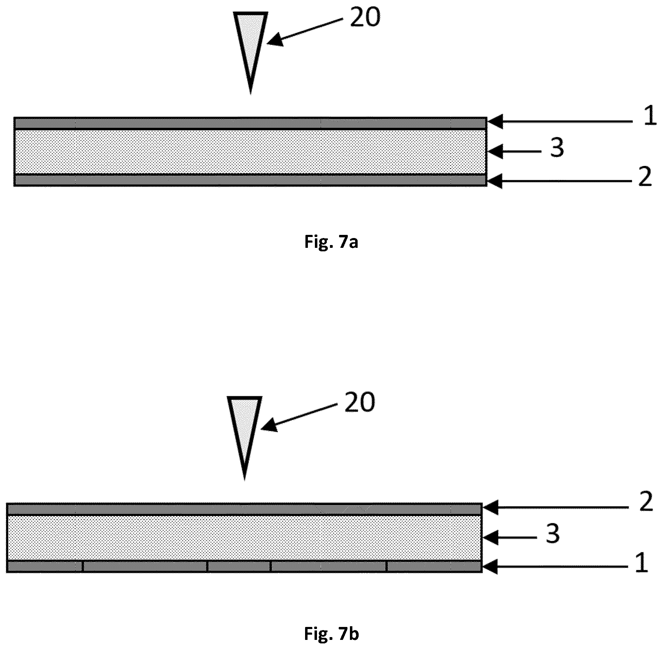

Figures 7a and 7b shows some further steps of this method. Firstly, the first transparent conductive electrode 1 is etched into first sections, each first section being electrically isolated with respect to the rest of the first sections. The etching process is done by means of a picosecond ultraviolet laser device 20.

Then, the readymade film is rotated and the second transparent conductive electrode 2 is etched into second sections, each second section being electrically isolated with respect to the rest of the second sections. These shapes are different from the shapes of the first sections. This the etching process is also done by means of a picosecond ultraviolet laser device 20.

Finally, a control unit is connected to the first and second transparent conductive electrodes. This control unit is configured to provide at least a first scenario where all the second sections receive the same electric signal and at least two first sections receive different electric signals and a second scenario wherein all the first sections receive the same electric signal and at least two second sections receive different electric signals.

## Claims

1. Optical arrangement comprising a first transparent conductive electrode (1), a second transparent conductive electrode (2) and an active optic material (3) arranged between the first and the second transparent conductive electrodes (1, 2) in electric contact with the first and the second transparent conductive electrodes (1, 2),
wherein the active optic material (3) is configured to change at least one optical property when subject to an electrical voltage;
wherein the first transparent conductive electrode (1) is divided into first sections (11-15), each first section being electrically isolated with respect to the rest of the first sections (11-15); the first transparent conductive electrode (1) is divided into at least three groups of first sections;
wherein the second transparent conductive electrode (2) is divided into second sections (21, 22, 23), each second section being electrically isolated with respect to the rest of the second sections (21, 22, 23);
wherein the optical arrangement further comprises a control unit (6) configured to provide an electric signal to each of the first sections (11-15) and to each of the second sections (21-23), wherein the control unit (6) is configured to provide at least a first scenario where all the second sections receive the same electric signal and at least two first sections receive different electric signals and a second scenario wherein all the first sections receive the same electric signal and at least two second sections receive different electric signals; the optical arrangement being **characterized in that**
the control unit (6) comprises a first element configured to receive a sinusoidal alternate current and transform it to a direct current signal and comprises a second element configured to transform the direct current signal to an alternate square wave, and comprises a third element configured to create phase-shifted signals from the square wave and to feed the first and second sections with the phase-shifted signals;
the third element of the control unit (6) is configured to create at least a first signal, a second signal, a third signal and a fourth signal from the square wave;
the second signal is shifted 45° with respect to the first signal;
the third signal is shifted 135° with respect to the first signal;
the fourth signal is in phase with the first signal; and
the control unit is configured to feed all the second sections with the first signal, the first group of first sections with the second signal, the second group of first sections with the third signal and the third group of first sections with the fourth signal.

2. Optical arrangement according to claim 1, wherein the active optical material (3) has a thickness comprised between 5 and 100 micro-meters.

3. Optical arrangement according to any of the preceding claims, wherein the first transparent conductive electrode (1) and/or the second transparent conductive electrode (2) comprises Indium Tin Oxide, silver nanowires, carbon nanotubes, graphene, transparent conductive polymers or nanometals.

4. Optical arrangement according to any of the preceding claims, wherein the first transparent conductive electrode (1) is deposited on a first transparent substrate (4) and/or the second transparent conductive electrode (2) is deposited on a second transparent substrate (5).

5. Optical arrangement according to claim 4, wherein the first transparent substrate (4) and/or the second transparent substrate (5) comprises a glass.

6. Optical arrangement according to claim 4, wherein the first transparent substrate (4) and/or the second transparent substrate (5) comprises a plastic film, such a film made of polyethylene terephthalate.

7. Optical arrangement according to any of claims 4 to 6, wherein the first transparent substrate (4) and/or the second transparent substrate (5) comprises an IR coating.

8. Optical arrangement according to any of the preceding claims, wherein the active optical material (3) comprises a Polymer-Dispersed Liquid Crystal.

9. Optical arrangement according to any of claims 1 to 6, wherein the active optical material (3) comprises a black dichroic dye Polymer Dispersed Liquid Crystal.

10. Method for manufacturing an optical arrangement according to any of the preceding claims, comprising the steps of
providing a first transparent conductive electrode (1), a second transparent conductive electrode (2) and an active optic material (3), wherein the active optic material (3) is configured to change at least one optical property when subject to an electrical voltage and comprises a first face and a second face, the second face being opposite to the first face;
attach the first transparent conductive electrode (1) to the first face of the optic material (3) and attach the second transparent conductive electrode (2) to the second face of the active optic material (3), thus achieving a readymade film;
etching the first transparent conductive electrode (1) into first sections (11-15), each first section being electrically isolated with respect to the rest of the first sections (11-15), wherein the etching process is done by means of a picosecond ultraviolet laser device (20);
etching the second transparent conductive electrode (2) into second sections (21, 22, 23), each second section being electrically isolated with respect to the rest of the second sections (21, 22, 23), wherein the etching process is done by means of a picosecond ultraviolet laser device (20);
connecting a control unit (6) to the first and second transparent conductive electrodes, wherein the control unit (6) is configured to provide at least a first scenario where all the second sections receive the same electric signal and at least two first sections receive different electric signals and a second scenario wherein all the first sections receive the same electric signal and at least two second sections receive different electric signals,
wherein the shape of at least one of the second sections is different from the shape of at least one of the first sections.

11. Method according to claim 10, further comprising a step of rotating the readymade film between the step of etching the first transparent conductive electrode and the step of etching the second transparent conductive electrode.

## Patentansprüche

1. Optische Anordnung, umfassend eine erste transparente leitfähige Elektrode (1), eine zweite transparente leitfähige Elektrode (2) und ein aktives optisches Material (3), das zwischen der ersten und der zweiten transparenten leitfähigen Elektrode (1, 2) in elektrischem Kontakt mit der ersten und der zweiten transparenten leitfähigen Elektrode (1, 2) angeordnet ist,
wobei das aktive optische Material (3) dazu konfiguriert ist, mindestens eine optische Eigenschaft zu verändern, wenn es einer elektrischen Spannung ausgesetzt wird;
wobei die erste transparente leitfähige Elektrode (1) in erste Abschnitte (11-15) unterteilt ist, wobei jeder erste Abschnitt in Bezug auf die übrigen ersten Abschnitte (11-15) elektrisch isoliert ist; wobei die erste transparente leitfähige Elektrode (1) in mindestens drei Gruppen von ersten Abschnitten unterteilt ist;
wobei die zweite transparente leitfähige Elektrode (2) in zweite Abschnitte (21, 22, 23) unterteilt ist, wobei jeder zweite Abschnitt in Bezug auf die übrigen zweiten Abschnitte (21, 22, 23) elektrisch isoliert ist;
wobei die optische Anordnung ferner eine Steuereinheit (6) umfasst, die dazu konfiguriert ist, jedem der ersten Abschnitte (11-15) und jedem der zweiten Abschnitte (21-23) ein elektrisches Signal bereitzustellen, wobei die Steuereinheit (6) dazu konfiguriert ist, mindestens ein erstes Szenario, in dem alle zweiten Abschnitte das gleiche elektrische Signal empfangen und mindestens zwei erste Abschnitte unterschiedliche elektrische Signale empfangen, und ein zweites Szenario bereitzustellen, in dem alle ersten Abschnitte das gleiche elektrische Signal empfangen und mindestens zwei zweite Abschnitte unterschiedliche elektrische Signale empfangen; wobei die optische Anordnung **dadurch gekennzeichnet ist, dass**
die Steuereinheit (6) ein erstes Element umfasst, das dazu konfiguriert ist, einen sinusförmigen Wechselstrom zu empfangen und in ein Gleichstromsignal umzuwandeln, und ein zweites Element umfasst, das dazu konfiguriert ist, das Gleichstromsignal in eine alternierende Rechteckwelle umzuwandeln, und ein drittes Element umfasst, das dazu konfiguriert ist, aus der Rechteckwelle phasenverschobene Signale zu erzeugen und den ersten und den zweiten Abschnitt mit den phasenverschobenen Signalen zu speisen;
das dritte Element der Steuereinheit (6) dazu konfiguriert ist, aus der Rechteckwelle mindestens ein erstes Signal, ein zweites Signal, ein drittes Signal und ein viertes Signal zu erzeugen;
das zweite Signal in Bezug auf das erste Signal um 45° verschoben ist;
das dritte Signal in Bezug auf das erste Signal um 135° verschoben ist;
das vierte Signal phasengleich mit dem ersten Signal ist; und
die Steuereinheit dazu konfiguriert ist, alle zweiten Abschnitte mit dem ersten Signal, die erste Gruppe von ersten Abschnitten mit dem zweiten Signal, die zweite Gruppe von ersten Abschnitten mit dem dritten Signal und die dritte Gruppe von ersten Abschnitten mit dem vierten Signal zu speisen.

2. Optische Anordnung nach Anspruch 1, wobei das aktive optische Material (3) eine Dicke zwischen 5 und 100 Mikrometern aufweist.

3. Optische Anordnung nach einem der vorhergehenden Ansprüche, wobei die erste transparente leitfähige Elektrode (1) und/oder die zweite transparente leitfähige Elektrode (2) Indium-Zinn-Oxid, Silbernanodrähte, Kohlenstoffnanoröhren, Graphen, transparente leitfähige Polymere oder Nanometalle umfasst.

4. Optische Anordnung nach einem der vorhergehenden Ansprüche, wobei die erste transparente leitfähige Elektrode (1) auf einem ersten transparenten Substrat (4) aufgebracht ist und/oder die zweite transparente leitfähige Elektrode (2) auf einem zweiten transparenten Substrat (5) aufgebracht ist.

5. Optische Anordnung nach Anspruch 4, wobei das erste transparente Substrat (4) und/oder das zweite transparente Substrat (5) ein Glas umfasst.

6. Optische Anordnung nach Anspruch 4, wobei das erste transparente Substrat (4) und/oder das zweite transparente Substrat (5) eine Kunststofffolie umfasst, wie eine Folie aus Polyethylenterephthalat.

7. Optische Anordnung nach einem der Ansprüche 4 bis 6, wobei das erste transparente Substrat (4) und/oder das zweite transparente Substrat (5) eine IR-Beschichtung umfasst.

8. Optische Anordnung nach einem der vorhergehenden Ansprüche, wobei das aktive optische Material (3) einen polymerdispergierten Flüssigkristall umfasst.

9. Optische Anordnung nach einem der Ansprüche 1 bis 6, wobei das aktive optische Material (3) einen polymerdispergierten Flüssigkristall mit schwarzem dichroitischem Farbstoff umfasst.

10. Verfahren zur Fertigung einer optischen Anordnung nach einem der vorhergehenden Ansprüche, umfassend die folgenden Schritte:
Bereitstellen einer ersten transparenten leitfähigen Elektrode (1), einer zweiten transparenten leitfähigen Elektrode (2) und eines optisch aktiven Materials (3),
wobei das optisch aktive Material (3) dazu konfiguriert ist, mindestens eine optische Eigenschaft zu ändern, wenn es einer elektrischen Spannung ausgesetzt wird, und eine erste Seite und eine zweite Seite aufweist, wobei die zweite Seite der ersten Seite gegenüberliegt;
Befestigen der ersten transparenten leitfähigen Elektrode (1) an der ersten Seite des optischen Materials (3) und Befestigen der zweiten transparenten leitfähigen Elektrode (2) an der zweiten Seite des aktiven optischen Materials (3), wodurch eine fertige Folie entsteht;
Ätzen der ersten transparenten leitfähigen Elektrode (1) in erste Abschnitte (11-15) auf, wobei jeder erste Abschnitt in Bezug auf die übrigen ersten Abschnitte (11-15) elektrisch isoliert ist, wobei der Ätzprozess mittels einer Pikosekunden-Ultraviolett-Laservorrichtung (20) durchgeführt wird;
Ätzen der zweiten transparenten leitfähigen Elektrode (2) in zweite Abschnitte (21, 22, 23), wobei jeder zweite Abschnitt in Bezug auf die übrigen zweiten Abschnitte (21, 22, 23) elektrisch isoliert ist, wobei der Ätzprozess mittels einer Pikosekunden-Ultraviolett-Laservorrichtung (20) durchgeführt wird;
Verbinden einer Steuereinheit (6) mit der ersten und der zweiten transparenten leitfähigen Elektrode, wobei die Steuereinheit (6) dazu konfiguriert ist, mindestens ein erstes Szenario, in dem alle zweiten Abschnitte das gleiche elektrische Signal empfangen und mindestens zwei erste Abschnitte unterschiedliche elektrische Signale empfangen, und ein zweites Szenario bereitzustellen, in dem alle ersten Abschnitte das gleiche elektrische Signal empfangen und mindestens zwei zweite Abschnitte unterschiedliche elektrische Signale empfangen,
wobei die Form mindestens eines der zweiten Abschnitte von der Form mindestens eines der ersten Abschnitte unterschiedlich ist.

11. Verfahren nach Anspruch 10, ferner umfassend einen Schritt des Drehens der fertigen Folie zwischen dem Schritt des Ätzens der ersten transparenten leitfähigen Elektrode und dem Schritt des Ätzens der zweiten transparenten leitfähigen Elektrode.

## Revendications

1. Agencement optique comprenant une première électrode conductrice transparente (1), une deuxième électrode conductrice transparente (2) et un matériau optique actif (3) disposé entre la première et la deuxième électrodes conductrices transparentes (1, 2) en contact électrique avec la première et la deuxième électrodes conductrices transparentes (2),
dans lequel le matériau optique actif (3) est configuré pour modifier au moins une propriété optique lorsqu'il est soumis à une tension électrique ;
dans lequel la première électrode conductrice transparente (1) est divisée en premières sections (11-15), chaque première section étant électriquement isolée par rapport au reste des premières sections (11-15) ; la première électrode conductrice transparente (1) est divisée en au moins trois groupes de premières sections ;
dans lequel la seconde électrode conductrice transparente (2) est divisée en secondes sections (21, 22, 23), chaque seconde section étant électriquement isolée par rapport au reste des secondes sections (21, 22, 23) ;
dans lequel l'agencement optique comprend en outre une unité de commande (6) configurée pour fournir un signal électrique à chacune des premières sections (11-15) et à chacune des secondes sections (21-23), l'unité de commande (6) étant configurée pour fournir au moins un premier scénario dans lequel toutes les secondes sections reçoivent le même signal électrique et au moins deux premières sections reçoivent des signaux électriques différents, et un second scénario dans lequel toutes les premières sections reçoivent le même signal électrique et au moins deux secondes sections reçoivent des signaux électriques différents ; l'agencement optique étant **caractérisé en ce que**
l'unité de commande (6) comprend un premier élément configuré pour recevoir un courant alternatif sinusoïdal et le transformer en un signal de courant continu et comprend un second élément configuré pour transformer le signal de courant continu en une onde carrée alternative, et comprend un troisième élément configuré pour créer des signaux déphasés à partir de l'onde carrée et pour alimenter les premières et secondes sections avec les signaux déphasés ;
le troisième élément de l'unité de commande (6) est configuré pour créer au moins un premier signal, un deuxième signal, un troisième signal et un quatrième signal à partir de l'onde carrée ;
le deuxième signal est déphasé de 45° par rapport au premier signal ;
le troisième signal est déphasé de 135° par rapport au premier signal ;
le quatrième signal est en phase avec le premier signal ; et
l'unité de commande est configurée pour alimenter toutes les secondes sections avec le premier signal, le premier groupe de premières sections avec le deuxième signal, le deuxième groupe de premières sections avec le troisième signal et le troisième groupe de premières sections avec le quatrième signal.

2. Agencement optique selon la revendication 1, dans lequel le matériau optique actif (3) présente une épaisseur comprise entre 5 et 100 micromètres.

3. Agencement optique selon la selon l'une quelconque des revendications précédentes, dans lequel la première électrode conductrice transparente (1) et/ou la deuxième électrode conductrice transparente (2) comprend de l'oxyde d'indium-étain, des nanofils d'argent, des nanotubes de carbone, du graphène, des polymères conducteurs transparents ou des nanométaux.

4. Agencement optique selon la selon l'une quelconque des revendications précédentes, dans lequel la première électrode conductrice transparente (1) est déposée sur un premier substrat transparent (4) et/ou la deuxième électrode conductrice transparente (2) est déposée sur un deuxième substrat transparent (5).

5. Agencement optique selon la revendication 4, dans lequel le premier substrat transparent (4) et/ou le deuxième substrat transparent (5) comprend du verre.

6. Agencement optique selon la revendication 4, dans lequel le premier substrat transparent (4) et/ou le deuxième substrat transparent (5) comprend un film plastique, tel qu'un film en polyéthylène téréphtalate.

7. Agencement optique selon l'une quelconque des revendications 4 à 6, dans lequel le premier substrat transparent (4) et/ou le deuxième substrat transparent (5) comprend un revêtement IR.

8. Agencement optique selon l'une quelconque des revendications précédentes, dans lequel le matériau optique actif (3) comprend un cristal liquide dispersé dans un polymère.

9. Agencement optique selon l'une quelconque des revendications 1 à 6, dans lequel le matériau optique actif (3) comprend un cristal liquide dispersé dans un polymère avec colorant dichroïque noir.

10. Procédé de fonctionnement d'un agencement optique selon l'une quelconque des revendications précédentes, comprenant les étapes consistant à
fournir une première électrode conductrice transparente (1), une seconde électrode conductrice transparente (2) et un matériau optique actif (3), dans lequel le matériau optique actif (3) est configuré pour modifier au moins une propriété optique lorsqu'il est soumis à une tension électrique et comprend une première face et une seconde face, la seconde face étant opposée à la première face ;
fixer la première électrode conductrice transparente (1) à la première face du matériau optique (3) et fixer la seconde électrode conductrice transparente (2) à la seconde face du matériau optique actif (3), obtenant ainsi un film prêt à l'emploi ;
graver la première électrode conductrice transparente (1) en premières sections (11-15), chaque première section étant électriquement isolée par rapport au reste des premières sections (11-15), le procédé de gravure étant réalisé au moyen d'un dispositif laser ultraviolet à picoseconde (20) ;
graver la seconde électrode conductrice transparente (2) en secondes sections (21, 22, 23), chaque seconde section étant électriquement isolée par rapport au reste des secondes sections (21, 22, 23), le procédé de gravure étant réalisé au moyen d'un dispositif laser ultraviolet à picoseconde (20) ;
connecter une unité de commande (6) aux première et seconde électrodes conductrices transparentes, l'unité de commande (6) étant configurée pour fournir au moins un premier scénario dans lequel toutes les secondes sections reçoivent le même signal électrique et au moins deux premières sections reçoivent des signaux électriques différents, et un second scénario dans lequel toutes les premières sections reçoivent le même signal électrique et au moins deux secondes sections reçoivent des signaux électriques différents,
dans lequel la forme d'au moins une des secondes sections est différente de la forme d'au moins une des premières sections.

11. Procédé selon la revendication 10, comprenant en outre une étape de rotation du film prêt à l'emploi entre l'étape de gravure de la première électrode conductrice transparente et l'étape de gravure de la seconde électrode conductrice transparente.
